# EUROPÄISCHE PATENTSCHRIFT

(11) **EP 4 495 712 B1**
(45) Veröffentlichungstag und Bekanntmachung des Hinweises auf die Patenterteilung: **04.11.2026**
(21) Anmeldenummer: 23186260.8
(22) Anmeldetag: 19.07.2023
(51) Int. Cl.: G05B 9/03

(54) **REDUNDANTES AUTOMATISIERUNGSSYSTEM UND VERFAHREN ZUM BETRIEB**
REDUNDANT AUTOMATION SYSTEM AND METHOD FOR OPERATING
SYSTÈME D'AUTOMATISATION REDONDANT ET PROCÉDÉ DE FONCTIONNEMENT

(43) Veröffentlichungstag der Anmeldung: 22.01.2025
(73) Patentinhaber: Siemens Aktiengesellschaft, 80333 München (DE)
(72) Erfinder: Grosch, Thomas, 90574 Roßtal (DE); Renschler, Albert, 76275 Ettlingen (DE)
(74) Vertreter: Siemens Patent Attorneys

(56) Entgegenhaltungen:
- EP-B1- 2 667 269
- US-B2- 9 389 971

## Beschreibung

Die Erfindung betrifft ein Redundantes Automatisierungssystem umfassend ein erstes Teilsystem und ein zweites Teilsystem, welche zur Steuerung eines technischen Prozesses jeweils ein Steuerprogramm aufweisen und identisch ausgestaltet sind, zwischen dem ersten Teilsystem und dem zweiten Teilsystem ist eine Synchronisationsverbindung vorhanden,
im ersten Teilsystem sind in einer Quell-Datei Zustandsinformationen gespeichert, welche statische Konfigurationsdaten und dynamische Laufzeitdaten umfassen, wobei das erste Teilsystem ein erstes Datenabgleichmittel ausgestaltet zum Datenabgleich der Zustandsinformationen des ersten Teilsystems mit Zustandsinformationen des zweiten Teilsystems aufweist, wobei das zweite Teilsystem ein zweites Datenabgleichmittel aufweist.

Im Automatisierungsumfeld werden verstärkt hochverfügbare Lösungen (H-Systeme) gefordert, welche geeignet sind, eventuell auftretende Stillstands-Zeiten einer Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über die Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Darüber hinaus muss auch gewährleistet sein, dass im Rahmen der Überführung der Prozesssteuerung von einem Solo- bzw. nicht-redundanten Betrieb in einen redundanten Betrieb, z.B. nach dem Austausch eines ausgefallenen Teilsystems, diese Überführung bzw. dieser Übergang stoßfrei bewerkstelligt wird. Im Rahmen einer derartigen Überführung ist es erforderlich, relevante Daten von dem bisher prozessführenden Teilsystem auf das neu bzw. zusätzlich angeschlossene bzw. aufgeschaltete Teilsystem zu übertragen. Im Rahmen dieser als Ankoppeln und Aufdaten bezeichneten Überführung während einer sogenannten Ankoppeln- und Aufdat-Phase (AuA-Phase) darf der zu steuernde technische Prozess bzw. die Prozesssteuerung nicht störend beeinflusst werden, die Prozesssteuerung muss während dieser AuA-Phase - im Folgenden der Einfachheit halber Aufdat-Phase genannt - störungsfrei weiterlaufen.

Aus der EP 2 667 269 B1 ist ein Verfahren zum Betreiben eines redundanten Automatisierungssystems bekannt. Die EP 2 657 797 B1 stellt ebenfalls ein Verfahren zum Betreiben eines redundanten Automatisierungssystems vor.

Bei einem Ankoppel- und Aufdatevorgang werden alle Zustandsrelevanten Daten von einer aktuell noch laufenden SPS auf die SPS übertragen, die in das redundante System integriert werden soll. Zu diesen Zustandsinformationen gehören auch persistente Daten, die üblicherweise in Dateien auf einem Dateisystem abgelegt sind. Diese persistenten Daten werden vom Steuerungsprogramm laufend verändert, wenn z.B. neue Logging-Daten auf dem Dateisystem abgelegt werden sollen. Eine Datenerfassung muss lückenlos erfolgen, auch während des Ankoppel- und Aufdatevorgangs bei dem die gleichen Daten laufend verändert und mit der neu hinzugefügten SPS synchronisiert werden müssen.

Bei den bisher bekannten Verfahren oder Geräten wird der schreibende Zugriff auf diese persistenten Daten während des Syncup-Vorgangs gesperrt und die Daten werden auf die neu hinzugefügte SPS kopiert. Schreibender Zugriff ist für das Steuerungsprogramm erst nach Abschluss des Aufdatevorgangs wieder möglich.

Es ist demnach von Nachteil, dass die im ersten Teilsystem gespeicherten Zustandsinformationen, insbesondere aktuelle dynamische Laufzeitdaten verloren gehen können bzw. aufwändig zwischengespeichert werden müssen.

Es ist Aufgabe der vorliegenden Erfindung diesen Nachteil zu beseitigen.

Die Aufgabe wird dadurch gelöst, dass das erste Datenabgleichmittel ausgestaltet ist die statischen Konfigurationsdaten zum zweiten Teilsystem zu übertragen, wobei das zweite Datenabgleichmittel dazu ausgestaltet ist die statischen Konfigurationsdaten zu sichern und eine Zieldatei für die dynamische Laufzeitdaten anzulegen, wobei das erste Datenabgleichmittel ausgestaltet ist mit einer ersten eigenständigen Programmeinheit, welche wiederum ausgestaltet ist Schreibzugriffe von dynamischen Laufzeitdaten des ersten Teilsystems auf die Quell-Datei für die Aktualisierung der dynamischen Laufzeitdaten des zweiten Teilsystems diese schrittweise auszulesen, und zur Synchronisation die Dateninhalte dieser Schreibzugriffe auf das zweite Teilsystem zu übertragen, dabei ist das zweite Datenabgleichmittel ausgestaltet mit einer zweiten eigenständigen Programmeinheit, welche wiederum zum schrittweisen Entgegennehmen der Schreibzugriffe und anschließendem Abspeichern in die Zieldatei ausgestaltet ist, wobei das erste Teilsystem derart ausgestaltet ist, wobei das erste Steuerprogramm mit der ersten eigenständigen Programmeinheit synchronisiert ist und dass das zweite Teilsystem derart ausgestaltet ist, dass das zweite Steuerprogramm mit der zweiten eigenständigen Programmeinheit synchronisiert ist, wodurch eine Reihenfolge der Schreibzugriffe auf die Quell-Datei und die Zieldatei auf beiden Teilsystemen identisch ist.

Sobald die Quell-Datei auf dem ersten Teilsystem vollständig gelesen und übertragen wurde, ist der Inhalt der Quell-Datei mit dem Inhalt der Zieldatei identisch, da zwischenzeitliche Schreibzugriffe ebenfalls auf beiden Teilsystemen synchronisiert durchgeführt werden. Ab diesem Zeitpunkt ist der redundante Betrieb erreicht und die zwischenzeitlich aktivierte eigenständigen Programmeinheit zur Datenübertragung können wieder beendet werden.

Nun kann die Datenerfassung lückenlos erfolgen, denn auch während der Synchronisationsphase werden die Daten weiterhin erfasst und fortlaufend durch die eigenständigen Programmeinheiten synchronisiert, ohne diese eigenständigen Programmeinheiten oder auch eigenständig ablaufende Tasks werden die Daten, welche zuvor ohne die Erfindung verlorengegangen wären, nach und nach wieder in das System eingebettet.

Weiterhin ist vorgesehen, dass das erste Teilsystem die Prozessführung durchführt und bei einen möglichen Fehler oder einem Ausfall des ersten Teilsystems das zweite Teilsystem die Prozessführung übernimmt, weiterhin ausgestaltet, dass das ausgefallene oder fehlerbehafte erste Teilsystem nach einer Fehlerkorrektur oder einem Austausch mit Zustandsinformationen von dem noch laufenden zweiten Teilsystem aktualisiert wird, um wieder synchron mit seinem Steuerprogramm zu dem Steuerprogramm des zweiten Teilsystems zu arbeiten um bei einem erneuten Ausfall des jeweiligen Teilsystems die Prozessführung zu übernehmen.

Um einen späteren Nachlauf zu verringern, wird ergänzend zur Synchronisation mit einer Aufdat-Phase gearbeitet. Bei der Überführung der Prozesssteuerung von einem Solo- bzw. nicht-redundanten Betrieb in einen redundanten Betrieb, z.B. nach dem Austausch eines ausgefallenen Teilsystems, soll diese Überführung bzw. dieser Übergang möglichst stoßfrei bewerkstelligt werden. Im Rahmen einer derartigen Überführung ist es erforderlich, relevante Daten von dem bisher prozessführenden Teilsystem auf das neu bzw. zusätzlich angeschlossene bzw. aufgeschaltete Teilsystem zu übertragen. Im Rahmen dieser als Ankoppeln und Aufdaten bezeichneten Überführung während einer sogenannten Ankoppeln- und Aufdat-Phase (AuA-Phase) darf der zu steuernde technische Prozess bzw. die Prozesssteuerung nicht störend beeinflusst werden, die Prozesssteuerung muss während dieser AuA-Phase - im Folgenden der Einfachheit halber Aufdat-Phase genannt - störungsfrei weiterlaufen.

Dazu ist das Redundantes Automatisierungssystem ausgestaltet zum Überführen der Prozesssteuerung von einem Solobetrieb eines der Teilsysteme in einen redundanten Steuerbetrieb mit dem anderen Teilsystem, wobei das eine Teilsystem ausgestaltet ist, dem anderen Teilsystem die zweite Datei fragmentiert im Rahmen einer Aufdat-Phase über die Synchronisationsverbindung zu übermitteln und Prozesseingangswerte sowie Freigaben des einen Teilsystems zwischenzuspeichern, wobei die Freigaben anzeigen, welche Verarbeitungsabschnitte des Steuerprogramms das eine Teilsystem bereits verarbeitet hat, dabei ist das andere Teilsystem ferner dazu ausgebildet ist, nach dem Empfang der zweiten Datei freigegebene Verarbeitungsabschnitte eines Steuerprogramms, welche den Verarbeitungsabschnitten des Steuerprogramms des einen Teilsystems entsprechen, unter Berücksichtigung der zwischengespeicherten Prozesseingangswerte mit einem zeitlichen Nachlauf zu verarbeiten, wobei das Automatisierungssystem dazu ausgebildet ist, zur Verringerung des zeitlichen Nachlaufs der Verarbeitung auf einen vorgegebenen Wert die Verarbeitungsabschnitte des Steuerprogramms relativ zur Verarbeitung der Verarbeitungsabschnitte des Steuerprogramms schneller zu verarbeiten.

Um eine Kommunikationslast zu verringern ist das redundante Automatisierungssystem dazu ausgestaltet, dass das erste Datenabgleichmittel die zweite Datei für die fragmentierte Übertragung in Datenstücke zerlegt, wobei die Größe dieser Datenstücke so gewählt ist, dass sie eine Reaktionsfähigkeit des ersten Teilsystems aufgrund der zusätzlichen Last für die Datenübertragung nicht negativ beeinflusst.

Auch wird die eingangs genannte Aufgabe durch ein Verfahren zum Betreiben eines redundanten Automatisierungssystems gelöst, wobei ein erstes Teilsystem und ein zweites Teilsystem zur Steuerung eines technischen Prozesses jeweils ein Steuerprogramm verarbeiten, wobei das erste Teilsystem mit einem ersten Steuerprogramm den Prozess führt und das zweite Teilsystem synchron ein zweites Steuerprogramm abarbeitet um bei einem Ausfall eines der beiden Teilsysteme, das jeweils ausgefallene oder fehlerbehafte Teilsysteme nach einer Fehlerkorrektur oder einem Austausch mit Zustandsinformationen von dem noch laufenden Teilsystem über ein Datenabgleichmittel aktualisiert wird, um wieder synchron mit seinem Steuerprogramm zu arbeiten um bei einem erneuten Ausfall des jeweiligen Teilsystems die Prozessführung zu übernehmen, wobei die Zustandsinformationen statische Konfigurationsdaten und dynamische Laufzeitdaten umfassen, mittels des ersten Datenabgleichmittels werden die statischen Konfigurationsdaten zum zweiten Teilsystem übertragen, mittels des zweiten Datenabgleichmittels werden die statischen Konfigurationsdaten gesichert und es wird eine Zieldatei für die dynamische Laufzeitdaten auf dem zweiten Teilsystem angelegt, das erste Datenabgleichmittel startet eine erste eigenständigen Programmeinheit, welche die Schreibzugriffe von dynamischen Laufzeitdaten des ersten Teilsystems auf die Quell-Datei für die Aktualisierung der dynamischen Laufzeitdaten des zweiten Teilsystems diese schrittweise ausliest, und zur Synchronisation die Dateninhalte dieser erneuten Schreibzugriffe auf das zweite Teilsystem überträgt, wobei das zweite Datenabgleichmittel eine zweite eigenständigen Programmeinheit startet, welche schrittweise die Dateninhalte der erneuten Schreibzugriffe entgegennimmt und anschließend in die Zieldatei abspeichert, wobei das erste Steuerprogramm mit der ersten eigenständigen Programmeinheit synchronisiert betrieben wird und dass das zweite Steuerprogramm mit der zweiten eigenständigen Programmeinheit synchronisiert betrieben wird, wodurch eine Reihenfolge der Schreibzugriffe auf die Quell-Datei und die Zieldatei auf beiden Teilsystemen identisch abläuft.

Die bisher eingesetzten Verfahren, sperren den schreibenden Zugriff während des Syncup-Vorgangs bzw. Aufdat-Vorgangs. Das in dieser Erfindung dargelegte Verfahren erlaubt es dem Steuerungsprogramm auch während des Syncup-Vorgangs schreibend auf die persistenten Daten zuzugreifen. Der Vorteil liegt in der lückenlosen Erfassung der persistenten Daten auch während des Syncup-Vorgangs. Das Steuerungsprogramm muss deshalb kein besonderes Verhalten für den Syncup-Vorgang implementieren (z.B. Zwischenspeicherung der Daten), was die Realisierung des Steuerungsprogramms vereinfacht und den Testaufwand reduziert.

Damit Parameter (z.B. Reglerparameter, Positionswerte, Grenzwerte) über NETZ-AUS und Neustart eines Teilsystems hinweg erhalten bleiben, müssen diese vorher persistent gesichert werden. Die Parameter können als remanente Daten oder mit den Schreibfunktionen einer SPS beispielsweise in einer CSV-Datei gesichert werden.

Im Sinne der Erfindung versteht man unter Persistenz in der Informatik die Eigenschaft eines Systems, den Zustand seiner Daten, seines Objektmodells und/oder seiner logischen Verbindungen über lange Zeit, insbesondere über einen geplanten oder ungeplanten Programmabbruch hinaus, bereitzuhalten. Dafür wird ein nichtflüchtiges Speichermedium benötigt; auch das Dateisystem oder eine Datenbank sowie eine durch Protokolle gesicherte bidirektionale und transaktionsorientierte Datenübertragung können als nicht-flüchtiges Medium betrachtet werden. Da ein Programm jederzeit unvorhergesehen unterbrochen werden kann, bedeutet persistente Datenhaltung insbesondere, dass jede Zustandsänderung der Daten sofort auf dem nichtflüchtigen Medium gespeichert werden muss.

Anhand der Zeichnung, in der ein Ausführungsbeispiel der Erfindung veranschaulicht ist, werden im Folgenden die Erfindung, deren Ausgestaltungen sowie Vorteile näher erläutert. Es zeigen:
- FIG 1: einen Ablauf einer zeitlich asynchronen Kopplung von zwei Teilsystemen,
- FIG 2: einen Aufdat-Ablauf,
- FIG 3: ein redundantes Automatisierungssystem,
- FIG 4: das redundantes Automatisierungssystem mit Datenabgleichmittel und
- FIG 5: einen Ablauf der Synchronisation mit der ersten und der zweiten Datei im ersten Teilsystem.

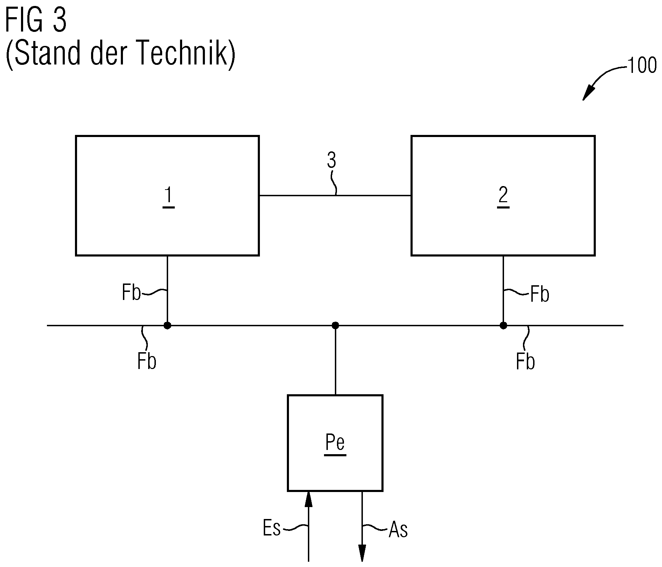

Es wird zunächst auf FIG 3 (Stand der Technik) verwiesen, in welcher ein bekanntes redundantes, zwei Teilsysteme umfassendes Automatisierungssystem 100 dargestellt ist. Ein erstes Teilsystem 1 und ein zweites Teilsystem 2 sind über einen Feldbus Fb mit einer Peripherieeinheit Pe verbunden. Dabei genügt der Feldbus Fb beispielsweise der PROFINET IO-Spezifikation. Prinzipiell sind auch andere Bussysteme, z.B. Ethernet, Fieldbus, Modbus oder aber auch parallele Bussysteme geeignet. Die Peripherieeinheit Pe erhält über Eingangsleitungen Es Signale von Messumformern oder Messwertgebern, die zur Erfassung eines Prozesszustands dienen, und gibt über Ausgangsleitungen As Signale an Stellglieder aus, mit welchen der Prozess beeinflusst wird. Der Prozess sowie die Messumformer, Messwertgeber und Stellglieder sind in der Figur der Übersichtlichkeit wegen nicht dargestellt. Die beiden Teilsysteme 1,2 arbeiten zyklisch und synchron dasselbe Steuerprogramm ab. Zu ihrer Synchronisation ist eine Synchronisationsverbindung 3 vorgesehen, wobei die Redundanz- und Überwachungsfunktionen über diese Synchronisationsverbindung 3 verwirklicht werden.

Wie erläutert, arbeitet ab einem Zeitpunkt, zu welchem eine Aufdat-Phase abgeschlossen ist, das Automatisierungssystem 100 in einer redundanten Betriebsart und im Hinblick auf die Prozesssteuerung ist ein Teilsystem 1,2 von dem Solobetrieb in den redundanten Betrieb mit einem weiteren Teilsystem überführt. Ab diesem Zeitpunkt durchlaufen beide Teilsysteme 1,2 ereignissynchron gleiche Programmpfade, z.B. aufgrund eines Ereignisses in Form eines Prozessalarms, wobei der Durchlauf mittels des ersten Teilsystems 1 und der Durchlauf mittels des zweiten Teilsystems 2 vorzugsweise zeitlich asynchron erfolgten.

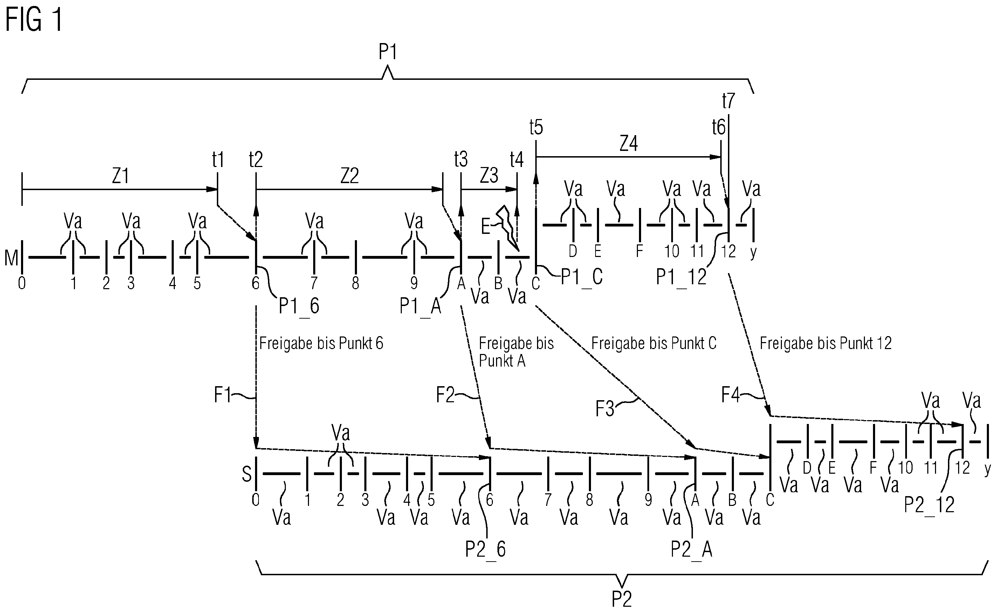

Zur Erläuterung einer ereignissynchronen Verarbeitung der Steuerprogramme P1, P2 und zum besseren Verständnis der Erfindung wird dazu im Folgenden auf FIG 1 verwiesen, in welcher ein vorgeschlagener Ablauf einer zeitlich asynchronen Kopplung von den zwei Teilsystemen 1,2 dargestellt wird. Eine "ereignissynchrone Verarbeitung" bedeutet in diesem Zusammenhang, dass sowohl der Master als auch der Slave aufgrund eines Ereignisses gleiche Programmpfade des jeweiligen Steuerprogramms durchlaufen, wobei die Durchläufe zeitlich asynchron erfolgen.

Es wird angenommen, dass eines der Teilsysteme 1,2 als Master M und eines der Teilsysteme 1,2 als Slave S bzw. als Reserve betrieben wird. Der Master M ist daher im Hinblick auf die Steuerung eines technischen Prozesses führend und übernimmt die Prozesssteuerung, wobei der Master M die Prozesseingangsinformationen bzw. Prozesseingangswerte von der Peripherieeinheit Pe (FIG 3) liest und zeitlich asynchron dem Slave S bereitstellt. Der Slave S übernimmt nur dann die Masterfunktion bzw. die Masterschaft, falls der Master M aufgrund einer Störung ausfällt.

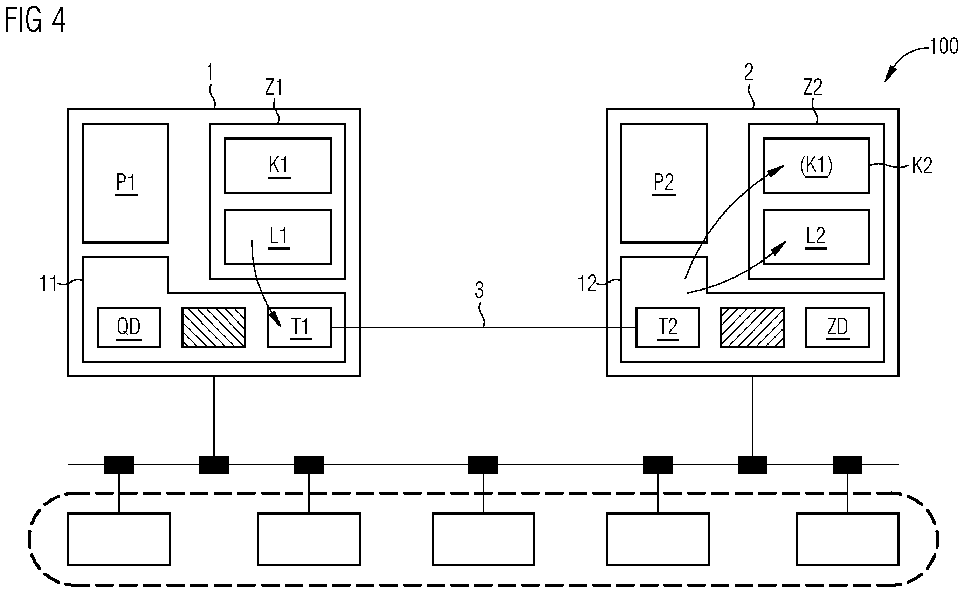

Der Master M verarbeitet ein Programm P1 zur Steuerung des technischen Prozesses, wobei auch der Slave S ein diesem ersten Steuerprogramm P1 entsprechendes zweites Steuerprogramm P2 verarbeitet. Beide Steuerprogramme P1, P2 weisen eine Vielzahl von Verarbeitungsabschnitten Va unterschiedlicher Zeitdauer auf, wobei die Steuerprogramme P1, P2 an dem jeweiligen Beginn und dem jeweiligen Ende jedes Verarbeitungsabschnittes Va unterbrechbar sind. Beginn und Ende eines jeden Verarbeitungsabschnittes Va, welcher gewöhnlich eine Vielzahl von Programmcodes umfasst, repräsentieren somit unterbrechbare Programm- bzw. Unterbrechungsstellen 0, 1, 2, ... y. An diesen Unterbrechungsstellen 0, 1, 2, ... y kann bei Bedarf das jeweilige Steuerprogramm P1, P2 mittels des Masters M und des Slaves S unterbrochen werden, um nach dem Auftreten eines Ereignisses bzw. eines Prozessalarms geeignete Reaktionen einleiten zu können. Ferner kann an diesen Unterbrechungsstellen 0, 1, 2, ... y das jeweilige Steuerprogramm P1, P2 unterbrochen werden, damit der Master M und der Slave S Freigaben, Quittungen oder sonstige Informationen über den Feldbus Fb oder über die Synchronisationsverbindung Sv (FIG 4) austauschen können. Nach Ablauf eines jeweiligen vorgebbaren bzw. vorgegebenen Zeitintervalls Zi, i= 1, 2, ... und zum jeweiligen Zeitpunkt des Auftretens einer nach Ablauf des jeweiligen Zeitintervalls Zi folgenden Unterbrechungsstelle - vorzugsweise der ersten auf das jeweilige Zeitintervall Zi folgenden Unterbrechungsstelle **-,** übermittelt der Master M dem Slave S eine Freigabe bzw. ein Freigabesignal, welches dem Slave S anzeigt, bis zu welchem Verarbeitungsabschnitt Va der Slave S das Steuerprogramm P2 verarbeiten darf. Diese Verarbeitungsabschnitte Va des Steuerprogramms P2 entsprechen denen, die der Master M bereits während der Verarbeitung des Steuerprogramms P1 verarbeitet hat.

Im vorliegenden Ausführungsbeispiel wird angenommen, dass nach Ablauf eines Zeitintervalls Z1 zu einem Zeitpunkt t1 und zu einem Zeitpunkt t2, zu welchem eine erste Unterbrechungsstelle P1_6 (Unterbrechungsstelle 6) auf das Zeitintervall Z1 folgt, der Master M dem Slave S eine Freigabe F1 übermittelt. Diese Freigabe F1 umfasst die Information für den Slave S, dass dieser sein zu verarbeitendes Steuerprogramm P2 bis zu einer Unterbrechungsstelle P2_6 (Unterbrechungsstelle 6) verarbeiten darf, wobei die Unterbrechungsstelle P2_6 des Steuerprogramms P2 der Unterbrechungsstelle P1_6 des Steuerprogramms P1 entspricht. Dies bedeutet, dass aufgrund der Freigabe der Slave S die Verarbeitungsabschnitte Va des Steuerprogramms P2 verarbeiten kann, welche den Verarbeitungsabschnitten Va des Steuerprogramms P1 bis zum Zeitpunkt der Erzeugung der Freigabe bzw. des Freigabesignals entsprechen, wobei im Beispiel der Einfachheit halber angenommen wird, dass der Zeitpunkt der Erzeugung der Freigabe dem Zeitpunkt der Übermittlung der Freigabe zum Slave S entspricht. Die Verarbeitung dieser Verarbeitungsschritte Va mittels des Slaves S erfolgt also zeitlich asynchron zur Verarbeitung der entsprechenden Verarbeitungsabschnitte Va mittels des Masters M, wobei nach der Verarbeitung der Verarbeitungsabschnitte Va des Steuerprogramms P2 durch den Slave S eine Bearbeitung von weiteren Verarbeitungsabschnitten Va durch den Slave S nur dann erfolgt, wenn der Master M dem Slave S eine weitere Freigabe übermittelt.

Der Zeitpunkt des Auftretens dieser Unterbrechungsstelle P1_6, P2_6 (Unterbrechungsstelle 6) repräsentiert den Beginn eines auf das Zeitintervall Z1 folgenden Zeitintervalls Z2.

In der beschriebenen Art und Weise erfolgt die weitere zeitlich asynchrone Verarbeitung der Steuerprogramme P1, P2. Zu einem Zeitpunkt t3 des Auftretens einer ersten Unterbrechungsstelle P1_A nach Ablauf des Zeitintervalls Z2 übermittelt der Master M dem Slave S eine weitere Freigabe F2, die dem Slave S anzeigt, dass dieser weitere Verarbeitungsabschnitte Va bis zu der Unterbrechungsstelle P2_A bearbeiten kann. Diese Verarbeitungsabschnitte Va entsprechen wiederum denen, welche der Master M bereits vom Zeitpunkt t2 bis zum Zeitpunkt t3, also bis zur Unterbrechungsstelle P1_A, verarbeitet hat. Dies bedeutet, dass der Slave S die Verarbeitungsabschnitte Va von dem Zeitpunkt t2 der vorigen Freigabe F1 bis zum Zeitpunkt t3 der aktuellen Freigabe F2 verarbeitet. Der Zeitpunkt t3, zu welchem die erste Unterbrechungsstelle P1_A nach Ablauf des Zeitintervalls Z2 aufgetreten ist, ist der Beginn eines auf das Zeitintervall Z2 folgenden Zeitintervalls Z3.

Es kann nun vorkommen, dass während eines Zeitintervalls ein Ereignis, z.B. ein Ereignis in Form eines Prozessalarms, auftritt. Im Ausführungsbeispiel ist mit E ein derartiges Ereignis bezeichnet, auf welches der Master M während des Zeitintervalls Z3 zu einem Zeitpunkt t4 geeignet nach Maßgabe des Steuerprogramms P1 reagieren muss. In diesem Fall übermittelt der Master M dem Slave S eine Freigabe F3 nicht zu einem Zeitpunkt des Auftretens einer nach dem Zeitintervall Z3 folgenden Unterbrechungsstelle nach dem Zeitintervall Z3, sondern zu einem Zeitpunkt t5 des Auftretens einer auf das Auftreten des Ereignisses E folgenden Unterbrechungsstelle P1_C (Unterbrechungsstelle C). Dies bedeutet, dass das Zeitintervall Z3 aufgrund des Ereignisses E verkürzt wird, wobei der Zeitpunkt t5 der Beginn eines folgenden Zeitintervalls Z4 ist. Aufgrund der dem Slave S übermittelten Freigabe F3 verarbeitet der Slave S die Verarbeitungsabschnitte Va des Steuerprogramms P2, welche den Verarbeitungsabschnitten Va des ersten Steuerprogramms P1 entsprechen, welche der Master M zwischen den Zeitpunkten t3 und t5 bereits verarbeitet hat.

Aufgrund des Ereignisses E verarbeitet der Master M während des Zeitintervalls Z4 Verarbeitungsabschnitte Va höherer Priorität, z.B. vollzieht der Master M einen Threadwechsel zum Zeitpunkt t5, und übermittelt wiederum nach Ablauf des Zeitintervalls Z4 zum Zeitpunkt t6 eine Freigabe F4 zu einem Zeitpunkt t7, zu welchem eine erste auf das Zeitintervall Z4 folgende Unterbrechungsstelle P1_12 (Unterbrechungsstelle 12) auftritt. Aufgrund dieser Freigabe verarbeitet der Slave S ebenfalls Verarbeitungsabschnitte Va bis zu einer Unterbrechungsstelle P2_12 (Unterbrechungsstelle 12) des Steuerprogramms P2, wobei diese Verarbeitungsabschnitte Va den Verarbeitungsabschnitten Va des Steuerprogramms P1 zwischen den Zeitpunkten t5 und t7 entsprechen und wobei der Slave S ebenfalls einen Threadwechsel vollzieht.

Wie erläutert, versetzen die Freigaben des Masters M den Slave S in die Lage, das gleiche "Threadgebirge" wie der Master M zu durchlaufen, was bedeutet, dass der Slave S einen "Threadwechsel" an einer Stelle im Steuerprogramm P2 vornimmt, die der Stelle im Steuerprogramm P1 entspricht. Der Slave S setzt seine Bearbeitung nur dann fort, wenn dieser dazu vom Master M durch eine Freigabe aufgefordert wird. Im Hinblick auf die Verarbeitung der Verarbeitungsabschnitte verarbeitet der Master M diese in Echtzeit wie in einem Stand-Alone- bzw. wie in einem nicht-redundanten Betrieb und erteilt in regelmäßigen Zeitabständen sowie nach Auftreten von Ereignissen Freigaben zur Verarbeitung entsprechender Verarbeitungsabschnitte durch den Slave S, wobei der Master M weiter das erste Steuerprogramm P1 verarbeitet und nicht aktiv auf eine Antwort des Slaves S wartet. Der Slave S läuft bezüglich der Verarbeitung der entsprechenden Verarbeitungsabschnitte dem Master M nach und verarbeitet diese aufgrund der erteilten Master-Freigaben.

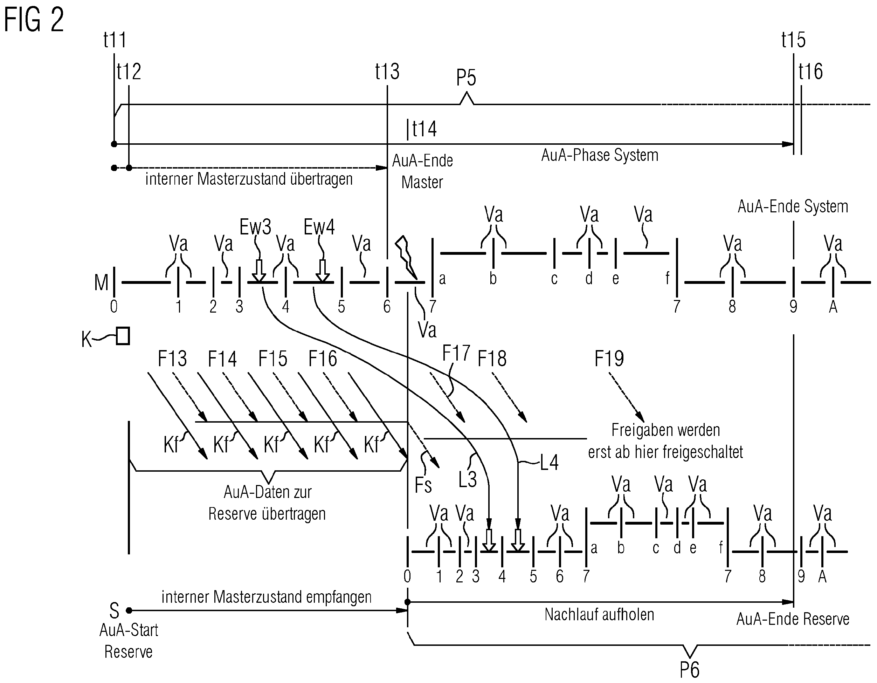

Im Folgenden wird angenommen, dass die Prozesssteuerung von einem Solobetrieb des Masters M in einen redundanten Steuerbetrieb mit dem Slave S überzuführen ist. Eine derartige Überführung ist z.B. dann erforderlich, wenn der Slave S nach einer Reparatur wieder an den Master M angekoppelt wird. Dazu wird auf FIG 2 verwiesen, in welcher ein Aufdat-Ablauf des Automatisierungssystems 100 dargestellt ist.

Diese Überführung beginnt zu einem Zeitpunkt t11, bis zu dem der Master M erkannt hat, dass der Slave S an den Feldbus Fb (FIG 3) angekoppelt ist, wobei ab diesem Zeitpunkt t11 die Aufdat-Phase sowohl des Masters M als auch des Slaves S beginnt. Der Master M erstellt ab diesem Zeitpunkt t11 eine lokale Kopie K aller relevanten Daten, welche seinen internen Zustand bis zu diesem Zeitpunkt t11 repräsentiert, wobei der Master M weiterhin im Solobetrieb den technischen Prozess steuert und Verarbeitungsabschnitte Va eines Steuerprogramms P5 verarbeitet. Ab einem Zeitpunkt t12 bis zu einem Zeitpunkt t13, zu dem die Aufdat-Phase des Masters M abgeschlossen ist, übermittelt der Master M dem Slave S fragmentiert diese Kopie K - was in der Zeichnung mittels Pfeilen Kf angedeutet ist -, die der Slave S bis zu einem Zeitpunkt t14 vollständig empfangen hat. Zu diesem Zeitpunkt t14 weist nun der Slave S den gleichen internen Zustand wie der Master zum Zeitpunkt t11 auf. Ab dem Zeitpunkt t12 werden ferner alle Freigaben des Master M sowie alle vom Master M von der Peripherieeinheit Pe (FIG 3) eingelesenen Prozesseingangswerte auf dem Master M, dem Slave S oder einem weiteren Teilsystem des Automatisierungssystems zwischengespeichert, wobei diese Freigaben für eine Bearbeitung durch den Slave S erst nach dem vollständigen Empfang der Kopie K freigeschaltet werden. Im vorliegenden Ausführungsbeispiel wird angenommen, dass während eines Zeitabschnitts ab dem Zeitpunkt t11 bis zum Zeitpunkt t13, zu welchem die Übertragung der Kopie K abgeschlossen ist, der im Solobetrieb laufende Master M Freigaben F13, F14, F15, F16 erzeugt und ferner Prozesseingangswerte Ew3, Ew4 eingelesen hat. Diese Freigaben F13 bis F16 und diese Prozesseingangswerte Ew3, Ew4 werden dem Slave S erst ab einem Zeitpunkt t14, also zu dem Zeitpunkt, zu welchem der interne Zustand des Masters M vollständig dem Slave S bereitgestellt ist, freigeschaltet, was in der Figur durch einen Pfeil Fs und durch geschwungene Linien L3, L4 angedeutet ist. Nach dieser Freischaltung durch den Master M führt der Slave S sich an den internen Zustand des Master Ms heran, indem der Slave S nach Maßgabe der Freigaben F13 bis F16 die Daten der Kopie K verarbeitet. Dabei verarbeitet der Slave S die Verarbeitungsabschnitte Va seines Steuerprogramms P6, die den Verarbeitungsabschnitten Va des Steuerprogramms P5 des Masters M bis zum Zeitpunkt t13 entsprechen, wobei der Slave S im Hinblick auf die Verarbeitung des Steuerprogramms P6 die Prozesseingangswerte Ew3, Ew4 berücksichtigt.

Aufgrund dessen, dass der Slave S sich zeitlich asynchron an den internen Zustand des Masters M heranführt, läuft im Hinblick auf die Verarbeitung der entsprechenden Verarbeitungsabschnitte Va des Steuerprogramms P6 der Slave S dem Master M nach, wobei dieser zeitliche Nachlauf auf ein tolerierbares Maß verringert werden muss; denn ein zu hoher zeitliche Nachlauf kann zu einem Redundanzverlust führen. Um diesen zeitlichen Nachlauf zu vermindern, ist vorgesehen, dass die Verarbeitungsgeschwindigkeit des Slaves S relativ zur Verarbeitungsgeschwindigkeit des Masters M höher ist, was in der Figur in Form "verkürzt" dargestellter Verarbeitungsabschnitte Va im Steuerprogramm P6 dargestellt ist. Diese relative Erhöhung der Verarbeitungsgeschwindigkeit des Slaves S kann z. B. bewirkt werden, indem der Slave S die Verarbeitungsabschnitte Va seines Programms P6 schneller oder der Master M die Verarbeitungsabschnitte Va seines Programms P5 langsamer verarbeitet. Erst dann, wenn der Nachlauf aufgeholt bzw. auf ein tolerierbares Maß bzw. auf einen vorgegebenen Wert verringert wird, ist die zum Zeitpunkt t12 beginnende Aufdat-Phase des Slaves S und somit des Automatisierungssystems 100 abgeschlossen.

Im vorliegenden Ausführungsbeispiel wird angenommen, dass der Nachlauf zu einem Zeitpunkt t15 auf ein tolerierbares Maß verringert wurde. Dieses Maß ist so gewählt bzw. vorgegeben, dass im Falle eines Ausfalls des Masters M der Slave S stoßfrei die Masterschaft übernehmen kann. In der Figur repräsentiert die zeitliche Differenz zwischen einem Zeitpunkt t16 und dem Zeitpunkt t15 das tolerierbare Maß, was in einem praktischen Ausführungsbeispiel der Erfindung im Millisekundenbereich liegt. Im Rahmen der Aufdat-Phase des Slaves S bearbeitet der Slave S ab dem Zeitpunkt t14 bis zum Zeitpunkt t15 sowohl die während der Übertragung der Kopie K zwischengespeicherten Freigaben F13 bis F16 als auch Freigaben F17, F18, F19, welche der Master M dem Slave S nach dieser Übertragung übermittelt. Diese Freigaben F17 bis F19 zeigen dem Slave S an, welche Verarbeitungsabschnitte Va des Steuerprogramms P6 ferner durch den Slave S zu verarbeiten sind, wobei diese Verarbeitungsabschnitte Va den Verarbeitungsabschnitten Va des Steuerprogramms P5 entsprechen, die der Master M bereits ab dem Zeitpunkt t14 verarbeitet hat. Mit anderen Worten: Nachdem der Master M dem Slave S die Kopie vollständig übermittelt hat bzw. der Slave S diese Kopie K vollständig empfangen hat, verarbeitet der Slave S ab dem Zeitpunkt t14 bis zum Zeitpunkt t16 alle freigegebenen Verarbeitungsabschnitte Va seines Steuerprogramms P6, welche denen entsprechen, die der Master M bereits ab dem Zeitpunkt t11 bis zum Zeitpunkt t15 verarbeitet hat.

Ab dem Zeitpunkt t15 ist die Aufdat-Phase abgeschlossen und das Automatisierungssystem 100 in einen redundanten Betrieb überführt. Die Prozesssteuerung ist vom Solobetrieb des Master M ist den redundanten Betrieb mit dem Slave S übergegangen, wobei die weiteren Durchläufe der entsprechenden Programmpfade auf dem Master M und dem Slave S ab dem Zeitpunkt t16 in der beschriebenen Art und Weise zeitlich asynchron oder auch in einer an sich bekannten Art und Weise zeitlich synchron erfolgen kann.

Die FIG 4 zeigt das zuvor beschriebene Automatisierungssystem 100 mit der Erweiterung des Datenabgleichmittels 11,12, dabei weist das erste Teilsystem 1 ein erstes Datenabgleichmittel 11 und das zweite Teilsystem 2 weist ein zweites Datenabgleichmittel 12 auf. Das erste Teilsystem 1 weist zur Steuerung des technischen Prozesses das erste Steuerprogramm P1 auf und das zweite Teilsystem 2 weist ebenfalls zur Steuerung des technischen Prozesses das zweite Steuerprogramm P2 auf. Um das erste Teilsystem 1 mit dem zweiten Teilsystem 2 zu synchronisieren, ist die Synchronisationsverbindung 3 vorhanden. Im ersten Teilsystem 1 sind Zustandsinformationen Z1 gespeichert, welche statische Konfigurationsdaten K1 und dynamische Laufzeitdaten L1 umfassen. Das erste Teilsystem 1 ist mit seinem ersten Datenabgleichmittel 11 ausgestaltet zum Datenabgleich der Zustandsinformationen Z1 des ersten Teilsystems 1 mit Zustandsinformationen Z2 des zweiten Teilsystems 2, wobei das zweite Teilsystem 2 das zweite Datenabgleichmittel 12 aufweist.

Das erste Datenabgleichmittel 11 ist ausgestaltet die statischen Konfigurationsdaten K1 zum zweiten Teilsystem 2 zu übertragen, das zweite Datenabgleichmittel 12 ist dazu ausgestaltet die statischen Konfigurationsdaten K1 zu sichern und eine Zieldatei ZD für die dynamische Laufzeitdaten L1 anzulegen, das erste Datenabgleichmittel 11 ist weiterhin ausgestaltet mit einer ersten eigenständigen Programmeinheit T1, welche wiederum ausgestaltet ist Schreibzugriffe von dynamischen Laufzeitdaten L1 des ersten Teilsystems 1, welche auch während der Auf-Dat Phase erfolgen können, auf die Quell-Datei QD für die Aktualisierung der dynamischen Laufzeitdaten L2 des zweiten Teilsystems 2 diese schrittweise auszulesen, und zur Synchronisation die Dateninhalte dieser erneuten Schreibzugriffe auf das zweite Teilsystem 1 zu übertragen. Die eigenständigen Programmeinheit T1 könnte als eine Task oder als ein synchronisierter Transferthread ausgestaltet sein.

Das zweite Datenabgleichmittel 12 ist ausgestaltet mit einer zweiten eigenständigen Programmeinheit T2, welche wiederum zum schrittweisen Entgegennehmen der erneuten Schreibzugriffe und anschließendem abspeichern in die Zieldatei (ZD) ausgestaltet ist. Auch die zweite eigenständigen Programmeinheit T2 könnte als eine Task oder als ein synchronisierter Transferthread ausgestaltet sein.

Um die Synchronität zu gewährleisten ist das erste Teilsystem 1 derart ausgestaltet, dass das erste Steuerprogramm P1 mit der ersten eigenständigen Programmeinheit T1 synchronisiert ist und das zweite Teilsystem 2 derart ausgestaltet ist, dass das zweite Steuerprogramm P2 mit der zweiten eigenständigen Programmeinheit T2 synchronisiert ist, wodurch eine Reihenfolge der Schreibzugriffe auf die Quell-Datei QD und die Zieldatei ZD auf beiden Teilsystemen identisch ist.

Um das zu erreichen, werden mittels des ersten Datenabgleichmittels 11 die statischen Konfigurationsdaten K1 zum zweiten Teilsystem 2 übertragen werden, mittels des zweiten Datenabgleichmittels 12 werden die statischen Konfigurationsdaten (K1) gesichert und eine Zieldatei (ZD) für die dynamische Laufzeitdaten L1 wird auf dem zweiten Teilsystem 2 angelegt.

Das erste Datenabgleichmittel 11 startet dann die erste eigenständigen Programmeinheit T1, welche die Schreibzugriffe der dynamischen Laufzeitdaten L1 des ersten Teilsystems auf die Quell-Datei QD für die Aktualisierung der dynamischen Laufzeitdaten L2 des zweiten Teilsystems 2 schrittweise ausliest, und zur Synchronisation die Dateninhalte dieser erneuten Schreibzugriffe auf das zweite Teilsystem 2 überträgt. Dann startet das zweite Datenabgleichmittel 12 die zweite eigenständige Programmeinheit T2, welche dann schrittweise die Dateninhalte der erneuten Schreibzugriffe entgegennimmt und anschließend in die Zieldatei (ZD) abspeichert.

Das erste Teilsystem 1 und das zweite Teilsystem 2 ist so konfiguriert, dass das erste Steuerprogramm P1 mit der ersten eigenständigen Programmeinheit T1 synchronisiert betrieben wird und dass das zweite Steuerprogramm P2 mit der zweiten eigenständigen Programmeinheit T2 synchronisiert betrieben wird, wodurch eine Reihenfolge der Schreibzugriffe auf die Quell-Datei QD und die Zieldatei ZD auf beiden Teilsystemen 1,2 identisch abläuft.

Sobald die Quell-Datei QD auf dem ersten Teilsystem 1 vollständig gelesen und übertragen wurde, wird der Inhalt der Quell-Datei QD mit dem Inhalt der Zieldatei ZD als identisch angesehen, weil zwischenzeitliche die Schreibzugriffe ebenfalls auf beiden Teilsystem 1,2 synchronisiert durchgeführt wurden. Ab diesem Zeitpunkt ist der redundante Betrieb erreicht und die zwischenzeitlich aktivierte eigenständigen Programmeinheiten T1, T2 zur Datenübertragung können wieder beendet werden.

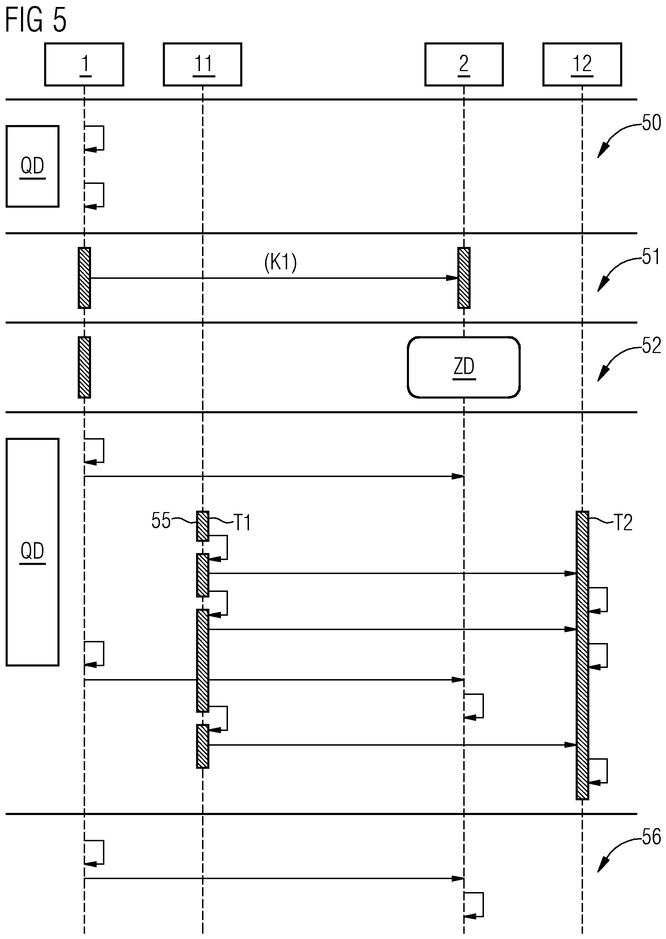

Gemäß der FIG 5 ist der verfahrensgemäße Ablauf zum "Aufdaten" bzw. Synchronisieren von dem ersten Teilsystem 1 zu dem zweiten Teilsystem 2 dargestellt. Das erste Teilsystem 1 läuft zunächst in einem Solobetrieb 50. In dem ersten Teilsystem 1 werden die schreibenden und lesende Zugriffe für die dynamische Laufzeitdaten L1 an der Quell-Datei QD ausgeführt. Die ersten statische Konfigurationsdaten K1 werden in dem Schritt Start Synchro 51 übertragen. In dem Schritt 52 wird ein Speicherabbild erstellt und auf dem zweiten Teilsystem wird die Zieldatei ZD angelegt. Damit startet die Datenübertragung 55 bzw. es wird die erste eigenständige Programmeinheit T1 gestartet. Mit Schritt 56 ist wieder der redundante Betrieb erreicht.

## Patentansprüche

1. Redundantes Automatisierungssystem (100) umfassend ein erstes Teilsystem (1) und ein zweites Teilsystem (2), welche zur Steuerung eines technischen Prozesses jeweils ein Steuerprogramm (P1, P2) aufweisen und identisch ausgestaltet sind, zwischen dem ersten Teilsystem (1) und dem zweiten Teilsystem (2) ist eine Synchronisationsverbindung (3) vorhanden,
im ersten Teilsystem (1) sind in einer Quell-Datei (QD) Zustandsinformationen (Z1) gespeichert, welche
- statische Konfigurationsdaten (K1) und
- dynamische Laufzeitdaten (L1) umfassen,
wobei das erste Teilsystem (1) ein erstes Datenabgleichmittel (11) ausgestaltet zum Datenabgleich der Zustandsinformationen (Z1) des ersten Teilsystems (1) mit Zustandsinformationen (Z2) des zweiten Teilsystems (2) aufweist, wobei das zweite Teilsystem (2) ein zweites Datenabgleichmittel (12) aufweist, **dadurch gekennzeichnet, dass**
- das erste Datenabgleichmittel (11) ausgestaltet ist die statischen Konfigurationsdaten (K1) zum zweiten Teilsystem (2) zu übertragen,
- das zweite Datenabgleichmittel (12) dazu ausgestaltet ist die statischen Konfigurationsdaten (K1) zu sichern und eine Zieldatei (ZD) für die dynamische Laufzeitdaten (L1) anzulegen,
- das erste Datenabgleichmittel (11) ausgestaltet ist mit einer ersten eigenständigen Programmeinheit (T1), welche wiederum ausgestaltet ist Schreibzugriffe von dynamischen Laufzeitdaten (L1) des ersten Teilsystems auf die Quell-Datei (QD) für die Aktualisierung der dynamischen Laufzeitdaten (L2) des zweiten Teilsystems (2) diese schrittweise auszulesen, und zur Synchronisation die Dateninhalte dieser Schreibzugriffe auf das zweite Teilsystem (1) zu übertragen,
- das zweite Datenabgleichmittel (12) ausgestaltet ist mit einer zweiten eigenständigen Programmeinheit (T2), welche wiederum zum schrittweisen Entgegennehmen der Schreibzugriffe und anschließendem Abspeichern in die Zieldatei (ZD) ausgestaltet ist,
- dass das erste Teilsystem (1) derart ausgestaltet ist, dass das erste Steuerprogramm (P1) mit der ersten eigenständigen Programmeinheit (T1) synchronisiert ist und
- dass das zweite Teilsystem (2) derart ausgestaltet ist, dass das zweite Steuerprogramm (P2) mit der zweiten eigenständigen Programmeinheit (T2) synchronisiert ist,
- wodurch eine Reihenfolge der Schreibzugriffe auf die Quell-Datei (QD) und die Zieldatei (ZD) auf beiden Teilsystemen identisch ist.

2. Redundantes Automatisierungssystem (100) nach Anspruch 1, wobei das erste Teilsystem (1) als Master-Teilsystem zur Prozessführung ausgestaltet ist und das zweite Teilsystem (2) als Slave-Teilsystem ausgestaltet ist und dazu ausgestaltet ist, die Prozessführung bei einem möglichen Fehler oder einem Ausfall des ersten Teilsystems (1) zu übernehmen,wobei das ausgefallene oder fehlerbehafte erste Teilsystem (1) ausgestaltet ist, nach einer Fehlerkorrektur oder einem Austausch mit Zustandsinformationen (Z2) von dem noch laufenden zweiten Teilsystem (2) aktualisiert zu werden, um wieder synchron mit seinem Steuerprogramm (P1) zu dem Steuerprogramm (P2) des zweiten Teilsystems (2) zu arbeiten um bei einem erneuten Ausfall des jeweiligen Teilsystems (1,2) die Prozessführung zu übernehmen.

3. Redundantes Automatisierungssystem (100) nach Anspruch 1 oder 2, ausgestaltet zum Überführen der Prozesssteuerung von einem Solobetrieb eines der Teilsysteme (1,2) in einen redundanten Steuerbetrieb mit dem anderen Teilsystem (1,2), wobei das eine Teilsystem (1) ausgestaltet ist dem anderen Teilsystem (2) die Inhalte der Quelldatei (QD) fragmentiert im Rahmen einer Aufdat-Phase über die Synchronisationsverbindung (3) zu übermitteln und Prozesseingangswerte (Ew3,Ew4) sowie Freigaben (F13 bis F16) des einen Teilsystems (1) zwischenzuspeichern, wobei die Freigaben anzeigen, welche Verarbeitungsabschnitte (Va) des Steuerprogramms (P1) das eine Teilsystem (1) bereits verarbeitet hat, dabei ist das andere Teilsystem (2) ferner dazu ausgebildet ist, nach dem Empfang der Inhalte der Quelldatei (QD) freigegebene Verarbeitungsabschnitte (Va) seines Steuerprogramms (P2), welche den Verarbeitungsabschnitten (Va) des Steuerprogramms (P1) des einen Teilsystems (1) entsprechen, unter Berücksichtigung der zwischengespeicherten Prozesseingangswerte (Ew3,Ew4) mit einem zeitlichen Nachlauf zu verarbeiten, wobei das Automatisierungssystem dazu ausgebildet ist, zur Verringerung des zeitlichen Nachlaufs der Verarbeitung auf einen vorgegebenen Wert die Verarbeitungsabschnitte (Va) des Steuerprogramms (P2) relativ zur Verarbeitung der Verarbeitungsabschnitte (Va) des Steuerprogramms (P1) schneller zu verarbeiten.

4. Redundantes Automatisierungssystem (100) nach Anspruch 3, wobei das erste Datenabgleichmittel (11) ausgestaltet ist, die Inhalte der Quelldatei (QD) für die fragmentierte Übertragung in Datenstücke vorgegebener Größe zu zerlegen, wobei die Größe dieser Datenstücke so gewählt ist, dass sie eine Reaktionsfähigkeit des ersten Teilsystems (1) aufgrund der zusätzlichen Last für die Datenübertragung nicht negativ beeinflusst.

5. Verfahren zum Betreiben eines redundanten Automatisierungssystems, wobei ein erstes Teilsystem (1) und ein zweites Teilsystem (2) zur Steuerung eines technischen Prozesses jeweils ein Steuerprogramm (P1,P2) verarbeiten, wobei das erstes Teilsystem (1) mit einem ersten Steuerprogramm (P1) den Prozess führt und das zweite Teilsystem (2) synchron ein zweites Steuerprogramm (P2) abarbeitet um bei einem Ausfall eines der beiden Teilsysteme (1,2), dass jeweils ausgefallene oder fehlerbehafte Teilsysteme (1,2) nach einer Fehlerkorrektur oder einem Austausch mit Zustandsinformationen (Z1,Z2) von dem noch laufenden Teilsystem (1,2) über ein Datenabgleichmittel (11,12) aktualisiert wird, um wieder synchron mit seinem Steuerprogramm (P1,P2) zu arbeiten um bei einem erneuten Ausfall des jeweiligen Teilsystems (1,2) die Prozessführung zu übernehmen, wobei die Zustandsinformationen (Z1,Z2)
- statische Konfigurationsdaten (K1,K2) und
- dynamische Laufzeitdaten (L1,L2) umfassen,
**dadurch gekennzeichnet, dass**
- mittels des ersten Datenabgleichmittels (11) die statischen Konfigurationsdaten (K1) zum zweiten Teilsystem (2) übertragen werden,
- mittels des zweiten Datenabgleichmittels (12) die statischen Konfigurationsdaten (K1) gesichert werden und das eine Zieldatei (ZD) für die dynamische Laufzeitdaten (L1) auf dem zweiten Teilsystem (2) angelegt wird,
- das erste Datenabgleichmittel (11) eine erste eigenständigen Programmeinheit (T1) startet, welche die Schreibzugriffe von dynamischen Laufzeitdaten (L1) des ersten Teilsystems auf die Quell-Datei (QD) für die Aktualisierung der dynamischen Laufzeitdaten (L2) des zweiten Teilsystems (2) diese schrittweise ausliest, und zur Synchronisation die Dateninhalte dieser Schreibzugriffe auf das zweite Teilsystem (1) überträgt,
- das zweite Datenabgleichmittel (12) eine zweite eigenständigen Programmeinheit (T2) startet, welche schrittweise die Dateninhalte der Schreibzugriffe entgegennimmt und anschließend in die Zieldatei (ZD) abspeichert
- dass das erste Steuerprogramm (P1) mit der ersten eigenständigen Programmeinheit (T1) synchronisiert betrieben wird und
- dass das zweite Steuerprogramm (P2) mit der zweiten eigenständigen Programmeinheit (T2) synchronisiert betrieben wird,
- wodurch eine Reihenfolge der Schreibzugriffe auf die Quell-Datei (QD) und die Zieldatei (ZD) auf beiden Teilsystemen identisch abläuft.

6. Verfahren nach Anspruch 5, wobei sobald die Quell-Datei (QD) auf dem ersten Teilsystem vollständig gelesen und übertragen wurde, der Inhalt der Quell-Datei (QD) mit dem Inhalt der Zieldatei als identisch angesehen wird, weil zwischenzeitliche die Schreibzugriffe ebenfalls auf beiden Teilsystem (1,2) synchronisiert durchgeführt wurden, ab diesem Zeitpunkt ist der redundante Betrieb erreicht und die zwischenzeitlich aktivierte eigenständigen Programmeinheiten zur Datenübertragung können wieder beendet werden.

## Claims

1. Redundant automation system (100) comprising a first subsystem (1) and a second subsystem (2), which each have a control program (P1, P2) for controlling a technical process and are embodied in an identical manner, a synchronisation connection (3) is present between the first subsystem (1) and the second subsystem (2),
saved in the first subsystem (1) in a source file (QD) is status information (Z1), which comprises
- static configuration data (K1) and
- dynamic runtime data (L1),
wherein the first subsystem (1) has a first data reconciliation means (11) embodied for data reconciliation of the status information (Z1) of the first subsystem (1) with status information (Z2) of the second subsystem (2), wherein the second subsystem (2) has a second data reconciliation means (12),
**characterised in that**
- the first data reconciliation means (11) is embodied to transfer the static configuration data (K1) to the second subsystem (2),
- the second data reconciliation means (12) is embodied to back up the static configuration data (K1) and create a target file (ZD) for the dynamic runtime data (L1),
- the first data reconciliation means (11) is embodied with a first independent program unit (T1), which in turn is embodied to incrementally read out write accesses of dynamic runtime data (L1) of the first subsystem to the source file (QD) for the updating of the dynamic runtime data (L2) of the second subsystem (2), and for synchronisation purposes to transfer the data contents of said write accesses to the second subsystem (1),
- the second data reconciliation means (12) is embodied with a second independent program unit (T2), which in turn is embodied for incrementally receiving the write accesses and subsequently storing them in the target file (ZD),
- the first subsystem (1) is embodied in such a manner that the first control program (P1) is synchronised with the first independent program unit (T1) and
- the second subsystem (2) is embodied in such a manner that the second control program (P2) is synchronised with the second independent program unit (T2),
- whereby an order of the write accesses to the source file (QD) and the target file (ZD) is identical on both subsystems.

2. Redundant automation system (100) according to claim 1, wherein the first subsystem (1) is embodied as master subsystem for guiding the process and the second subsystem (2) is embodied a slave subsystem and is embodied to assume the guiding of the process in the event of a possible fault or a failure of the first subsystem (1), wherein the failed or faulty first subsystem (1) is embodied, after fault correction or a replacement, to be updated with status information (Z2) from the second subsystem (2) that is still running, in order for its control program (P1) to once again operate in sync with the control program (P2) of the second subsystem (2), in order to assume the guiding of the process should the respective subsystem (1,2) fail again.

3. Redundant automation system (100) according to claim 1 or 2, embodied to transfer the process control from solo operation of one of the subsystems (1,2) to redundant control operation with the other subsystem (1,2), wherein the one subsystem (1) is embodied to transmit contents of the source file (QD) in fragmented form to the other subsystem (2) as part of an update phase via the synchronisation connection (3) and to temporarily save process input values (Ew3,Ew4) and approvals (F13 to F16) by the one subsystem (1), wherein the approvals show which processing segments (Va) of the control program (P1) the one subsystem (1) has already processed, in this case the other subsystem (2) is further embodied, after receiving the contents of the source file (QD), to process approved processing segments (Va) of its control program (P2), which correspond to the processing segments (Va) of the control program (P1) of the one subsystem (1), while taking into consideration the temporarily stored process input values (Ew3,Ew4) with a time lag, wherein the automation system is embodied to process the processing segments (Va) of the control program (P2) more quickly relative to the processing of the processing segments (Va) of the control program (P1) in order to reduce the time lag of the processing to a predefined value.

4. Redundant automation system (100) according to claim 3, wherein the first data reconciliation means (11) is embodied to break down the contents of the source file (QD) into data pieces of a predetermined for the fragmented transfer, wherein the size of said data pieces is chosen such that it does not have a negative influence on a responsiveness of the first subsystem (1) due to the additional load for the data transfer.

5. Method for operating a redundant automation system, wherein a first subsystem (1) and a second subsystem (2) for controlling a technical process in each case process a control program (P1,P2), wherein the first subsystem (1) guides the process with a first control program (P1) and the second subsystem (2) processes a second control program (P2) in sync in order that, in the event of a failure of one of the two subsystems (1,2), the subsystem (1,2) that has failed or is faulty in each case, after fault correction or a replacement, is updated with status information (Z1,Z2) from the subsystem (1,2) that is still running via a data reconciliation means (11,12), in order to operate in sync with its control program (P1,P2) again, in order to assume the guiding of the process in the event of a repeat failure of the respective subsystem (1,2), wherein the status information (Z1,Z2) comprises
- static configuration data (K1,K2) and
- dynamic runtime data (L1,L2),
**characterised in that**
- by means of the first data reconciliation means (11) the static configuration data (K1) is transferred to the second subsystem (2),
- by means of the second data reconciliation means (12) the static configuration data (K1) is backed up and the one target file (ZD) is created for the dynamic runtime data (L1) on the second subsystem (2),
- the first data reconciliation means (11) starts a first independent program unit (T1), which incrementally reads out the write accesses of dynamic runtime data (L1) of the first subsystem to the source file (QD) for the updating of the dynamic runtime data (L2) of the second subsystem (2), and for synchronisation purposes transfers the data contents of said write accesses to the second subsystem (1),
- the second data reconciliation means (12) starts a second independent program unit (T2), which incrementally receives the data contents of the write accesses and subsequently stores them in the target file (ZD),
- the first control program (P1) is operated by the first independent program unit (T1) in a synchronised manner and
- the second control program (P2) is operated by the second independent program unit (T2) in a synchronised manner,
- whereby an order of the write accesses to the source file (QD) and the target file (ZD) proceeds in an identical manner on both subsystems.

6. Method according to claim 5, wherein as soon as the source file (QD) on the first subsystem has been fully read and transferred, the content of the source file (QD) is considered identical to the content of the target file, because in the meantime the write accesses have likewise been performed on both subsystems (1,2) in a synchronised manner, as of this point in time, the redundant operation is achieved and the independent program units for data transfer that were activated in the meantime can be terminated again.

## Revendications

1. Système (100) redondant d'automatisation comprenant un premier système (1) partiel et un deuxième système (2) partiel, qui ont, pour la commande d'une opération technique, respectivement un programme (P1, P2) de commande et qui sont conformés de manière identique, il y a entre le premier système (1) partiel et le deuxième système (2) partiel une liaison (3) de synchronisation, dans le premier système (1) partiel sont mises en mémoire, dans un fichier (QD) source, des informations (Z1) d'état, qui comprennent
- des données (K1) statiques de configuration et
- des données (L1) dynamiques de temps d'exploitation,
dans lequel le premier système (1) partiel a un premier moyen (11) d'alignement de données pour l'alignement de données des informations (Z1) d'état du premier système (1) partiel sur des informations (Z2) d'état du deuxième système (2) partiel, dans lequel le deuxième système (2) partiel a un deuxième moyen (12) d'alignement de données,
**caractérisé en ce que**
- le premier moyen (11) d'alignement de données est conformé pour transmettre les données (K1) statiques de configuration au deuxième système (2) partiel,
- le deuxième moyen (12) d'alignement de données est conformé pour sécuriser les données (K1) statiques de configuration et pour créer un fichier (ZD) cible pour les données (L1) dynamiques de temps d'exploitation,
- le premier moyen (11) d'alignement de données est conformé en ayant une première unité (T1) de programme indépendante, qui est conformée à son tour pour lire pas à pas des accès en écriture de données (L1) dynamiques de temps d'exploitation du premier système partiel sur le fichier (QD) source pour la mise à jour des données (L2) dynamiques de temps d'exploitation du deuxième système (2) partiel, et, pour la synchronisation, pour transmettre les contenus de données de ces accès en écriture au deuxième système (1) partiel,
- le deuxième moyen (12) d'alignement des données est conformé en ayant une deuxième unité (T2) de programme indépendante, qui est conformée à son tour pour la réception pas à pas des accès en écriture et ensuite leur mise en mémoire dans le fichier (ZD) cible,
- **en ce que** le premier système (1) partiel est conformé, de manière à synchroniser le premier programme (P1) de commande avec la première unité (T1) de programme indépendante, et
- **en ce que** le deuxième système (2) partiel est conformé, de manière à synchroniser le deuxième programme (P2) de commande avec la deuxième unité (T2) de programme indépendante,
- grâce à quoi une séquence des accès en écriture sur le fichier (QD) source et le fichier (ZD) cible est identique sur les deux systèmes partiels.

2. Système (100) redondant d'automatisation suivant la revendication 1, dans lequel
le premier système (1) partiel est conformé en système partiel maître pour la conduite de l'opération et le deuxième système (2) partiel est conformé en système partiel esclave et est conformé pour prendre en charge la conduite de l'opération, lors d'une défaillance éventuelle ou lors d'une panne du premier système (1) partiel, dans lequel le premier système (1) partiel en panne ou défaillant est conformé pour, après une correction de la défaillance ou un remplacement, être mis à jour par des informations (Z2) d'état du deuxième système (2) partiel encore en exploitation,
afin de travailler à nouveau par son programme (P1) de commande en synchronisme avec le programme (P2) de commande du deuxième système (2) partiel, et, si une défaillance est renouvelée du système (1, 2) partiel respectif, prendre en charge la conduite du processus.

3. Système (100) redondant d'automatisation suivant la revendication 1 ou 2, conformé pour faire passer la commande de processus d'une exploitation en solo de l'un des systèmes (1, 2) partiels en une exploitation de commande redondante par l'autre système (1, 2) partiel, dans lequel le un système (1) partiel est conformé pour transmettre par la liaison (3) de synchronisation à l'autre système (2) partiel les contenus du fichier (QD) source fragmentés dans le cadre d'une phase de mise à jour et pour mettre en mémoire intermédiaire des valeurs (Ew3, Ew4) d'entrée de processus ainsi que des validations (F13 à F16) du un système (1) partiel, les validations indiquant les parties (Va) de traitement du programme (P1) de commande que le un système (1) partiel a déjà traitées, l'autre système (2) partiel étant constitué en outre pour, après la réception des contenus du fichier (QD) source, traiter avec un décalage temporel, en tenant compte des valeurs (Ew3, Ew4) d'entrée d'opération mises en mémoire intermédiaire, des parties (Va) validées de traitement de son programme (P2) de commande, qui correspondent aux parties (Va) de traitement du programme (P1) de commande du un système (1) partiel, dans lequel le système d'automatisation est constitué pour, pour la diminution du décalage temporel du traitement jusqu'à une valeur donnée à l'avance, traiter plus rapidement des parties (Va) de traitement du programme (P2) de commande que le traitement des parties (Va) de traitement du programme (P1) de commande.

4. Système (100) redondant d'automatisation suivant la revendication 3, dans lequel le premier moyen (11) d'alignement de données est conformé pour décomposer des contenus du fichier (QD) source pour la transmission fragmentée en pièces de données de dimension donnée à l'avance, dans lequel la dimension de ces pièces de données est choisie, de manière à ne pas influencer négativement, en raison de la charge supplémentaire pour la transmission de données, une aptitude à réagir du premier système (1) partiel.

5. Procédé d'exploitation d'un système redondant d'automatisation, dans lequel un premier système (1) partiel et un deuxième système (2) partiel traitent, pour la commande d'une opération technique, respectivement un programme (P1, P2) de commande, dans lequel le premier système (1) partiel conduit l'opération par un premier programme (P1) de commande et le deuxième système (2) partiel élabore en synchronisme un deuxième programme (P2) de commande afin, en cas de défaillance de l'un des deux systèmes (1, 2) partiels, que des systèmes (1, 2) partiels respectifs tombés en panne ou défaillants soient mis à jour par un moyen (11, 12) d'alignement de données, après une correction de défaillance ou un remplacement par des informations (Z1, Z2) d'état du système (1, 2) partiel encore en exploitation, afin de travailler à nouveau en synchronisme avec son programme (P1, P2) de commande, afin, lors d'une défaillance renouvelée du système (1, 2) partiel respectif, prendre en charge la conduite de l'opération, dans lequel des informations (Z1, Z2) d'état comprennent
- des données (K1, K2) statiques de configuration, et
- des données (L1, L2) dynamiques de temps d'exploitation, **caractérisé en ce que**,
- au moyen du premier moyen (11) d'alignement de données, on transmet les données (K1) statiques de configuration au deuxième système (2) partiel,
- au moyen du deuxième moyen (12) d'alignement de données, on sécurise les données (K1) statiques de configuration et on exploite le un fichier (ZD) cible pour les données (L1) dynamiques de temps d'exploitation sur le deuxième système (2) partiel,
- le premier moyen (11) d'alignement de données démarre une première unité (T1) de programme indépendante, qui lit pas à pas les accès en écriture de données (L1) dynamiques de temps d'exploitation du premier système partiel sur le fichier (QD) source pour la mise à jour des données (L2) dynamiques de temps d'exploitation du deuxième système (2) partiel, et transmet, pour la synchronisation des contenus de données, ces accès en écriture au deuxième système (1) partiel,
- le deuxième moyen (12) d'alignement de données démarre une deuxième unité (T2) de programme indépendante, qui reçoit pas à pas les contenus de données des accès en écriture et met ensuite en mémoire dans le fichier (ZD) cible,
- **en ce que** l'on exploite de manière synchronisée le premier programme (P1) de commande avec la première unité (T1) indépendante, et
- **en ce que** l'on exploite le deuxième programme (P2) de commande de manière synchronisée avec la deuxième unité (T2) de programme indépendante,
- grâce à quoi une séquence des accès en écriture se déroule sur les deux systèmes partiels sur le fichier (QD) source et le fichier (ZD) cible.

6. Procédé suivant la revendication 5, dans lequel, dès que le fichier (QD) source a été lu complètement sur le premier système partiel et transmis, on considère comme identique le contenu du fichier (QD) source et le contenu du fichier cible, parce que intermédiairement les accès en écriture ont été également synchronisés sur les deux systèmes (1, 2) partiels, depuis cet instant l'exploitation redondante est atteinte et on peut à nouveau remettre fin intermédiairement aux unités de programmation indépendantes pour la transmission de données.
